# EUROPEAN PATENT APPLICATION

(11) **EP 4 404 432 A1**
(43) Date of publication of application: **24.07.2024**
(21) Application number: 21957506.5
(22) Date of filing: 16.09.2021
(51) Int. Cl.: H02K 1/27

(54) **ELECTRIC MOTOR, COMPRESSOR, AND AIR CONDITIONER**

(71) Applicant: MITSUBISHI ELECTRIC CORPORATION, Chiyoda-ku Tokyo 100-8310 (JP)
(72) Inventor: YABE, Koji, Tokyo 100-8310 (JP); HIROSAWA, Yuji, Tokyo 100-8310 (JP)
(74) Representative: Pfenning, Meinig & Partner mbB
(86) International application number: PCT/JP2021/034031
(87) International publication number: WO 2023/042324

(57) **Abstract**

An electric motor (1) includes a stator (3) and a rotor (2). An end of the stator core (31) on a first side in an axial direction is located away from the rotor core (21) to the first side. The electric motor (1) satisfies Ls/2 > Lb + Lm/2 and Ls/2 < Lb + La, where Ls is a length of the stator core (31) in the axial direction, Lb is a distance in the axial direction between the end of the stator core (31) on the first side and an end of the rotor core (21) on the first side, Lm is a length of the permanent magnet (22) in the axial direction, and La is a distance in the axial direction from the end of the rotor core (21) on the first side to a center of the permanent magnet (22) in the axial direction.

## Description

### TECHNICAL FIELD

The present disclosure relates to an electric motor, a compressor, and an air conditioner.

### BACKGROUND ART

In general, an electric motor with a permanent magnet which is shorter than the stator core in the axial direction has been proposed (e.g., Patent Reference 1).

### PRIOR ART REFERENCE

### PATENT REFERENCE

Patent Reference 1: Japanese Patent Application Publication No. 2003-274591

### SUMMARY OF THE INVENTION

### PROBLEM TO BE SOLVED BY THE INVENTION

However, if the permanent magnet is shorter than the stator core in the axial direction, the magnetic attractive force between the stator and the rotor becomes unstable depending on the center position in the axial direction of the permanent magnet with respect to the center of the stator core in the axial direction, and thus the noise in the electric motor increases due to a rotor vibration.

It is an object of the present disclosure to reduce noise in an electric motor.

### MEANS OF SOLVING THE PROBLEM

An electric motor according to an aspect of the present disclosure includes:
a stator including a stator core and a coil provided on the stator core; and
a rotor disposed inside the stator and including a rotor core and a permanent magnet, the rotor core including a magnet insertion hole, the permanent magnet being disposed in the magnet insertion hole,
wherein an end of the stator core on a first side in an axial direction is located away from the rotor core to the first side,
the electric motor satisfies Ls/2 > Lb + Lm/2 and Ls/2 < Lb + La
where Ls is a length of the stator core in the axial direction, Lb is a distance in the axial direction between the end of the stator core on the first side and an end of the rotor core on the first side, Lm is a length of the permanent magnet in the axial direction, and La is a distance in the axial direction from the end of the rotor core on the first side to a center of the permanent magnet in the axial direction.

A compressor according to another aspect of the present disclosure includes:
a sealed container;
a compression device disposed in the sealed container; and
the electric motor to drive the compression device.

An air conditioner according to another aspect of the present disclosure includes:
the compressor; and
a heat exchanger.

### EFFECTS OF THE INVENTION

According to the present disclosure, noise in the electric motor can be reduced.

FIG. 1 is a side view schematically showing an electric motor according to a first embodiment.
FIG. 2 is a cross-sectional view schematically showing the inside of the electric motor.
FIG. 3 is a cross-sectional view showing another example of a rotor.
FIG. 4 is a cross-sectional view showing a still another example of the rotor.
FIG. 5 is a cross-sectional view showing a still another example of the rotor.
FIG. 6 is a cross-sectional view of the rotor in FIG. 5 taken along line A6-A6.
FIG. 7 is a cross-sectional view of the rotor in FIG. 5 taken along line A7-A7.
FIG. 8 is a cross-sectional view showing another example of a rotor core shown in FIG. 5.
FIG. 9 is a cross-sectional view showing still another example of the rotor core shown in FIG. 5.
FIG. 10A and FIG. 10B are cross-sectional views showing still another example of the rotor core shown in FIG. 5.
FIG. 11 is a cross-sectional view schematically showing an electric motor as a comparative example.
FIG. 12 is a cross-sectional view showing the structure of a compressor according to a second embodiment.
FIG. 13 is a diagram schematically showing the structure of a refrigerating and air conditioning apparatus according to a third embodiment.

### MODE FOR CARRYING OUT THE INVENTION

### First Embodiment

In an xyz orthogonal coordinate system shown in each drawing, a z-axis direction (z-axis) represents a direction parallel to the axis Ax of the electric motor 1, an x-axis direction (x-axis) represents a direction orthogonal to the z-axis direction, and a y-axis direction (y-axis) represents a direction orthogonal to both the z-axis direction and the x-axis direction. The axis Ax refers to the rotation center of a rotor 2, that is, the rotation axis of the rotor 2. The direction parallel to the axis Ax is also referred to as the "axis direction of the rotor 2" or simply the "axis direction." A radial direction refers to a direction along a radius of the rotor 2 or a stator 3, and refers to a direction orthogonal to the axis Ax. An xy plane refers to a plane orthogonal to the axial direction. An arrow D1 represents a circumferential direction about the axis Ax. A circumferential direction of the rotor 2 or the stator 3 is also simply referred to as the "circumferential direction."

### Electric Motor 1

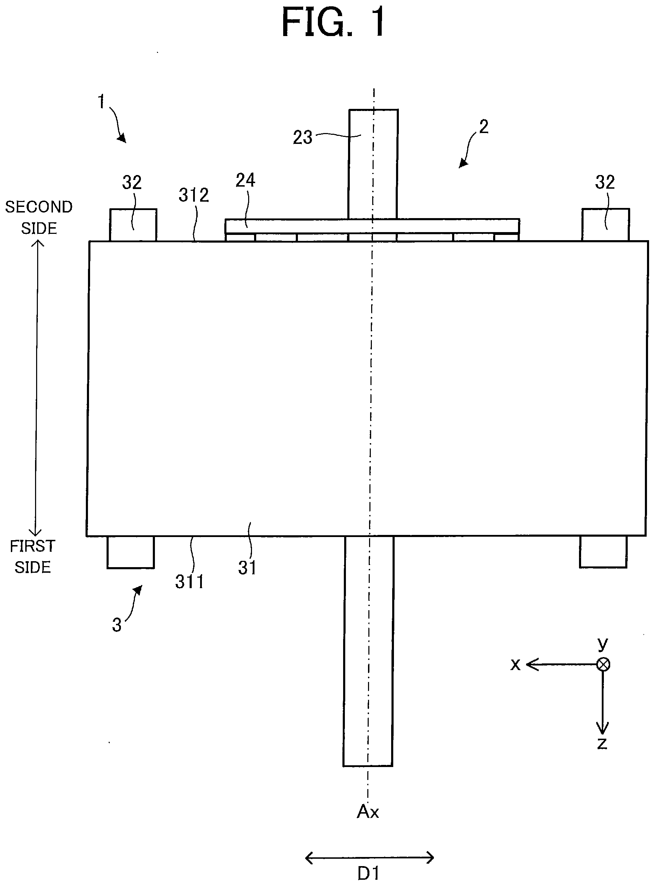

FIG. 1 is a side view schematically showing the electric motor 1 according to the first embodiment. In FIG. 1, the lower side (i.e., +z side) is the first side, and the upper side (i.e., -z side) is the second side. In other words, the second side is opposite the first side in the axial direction.

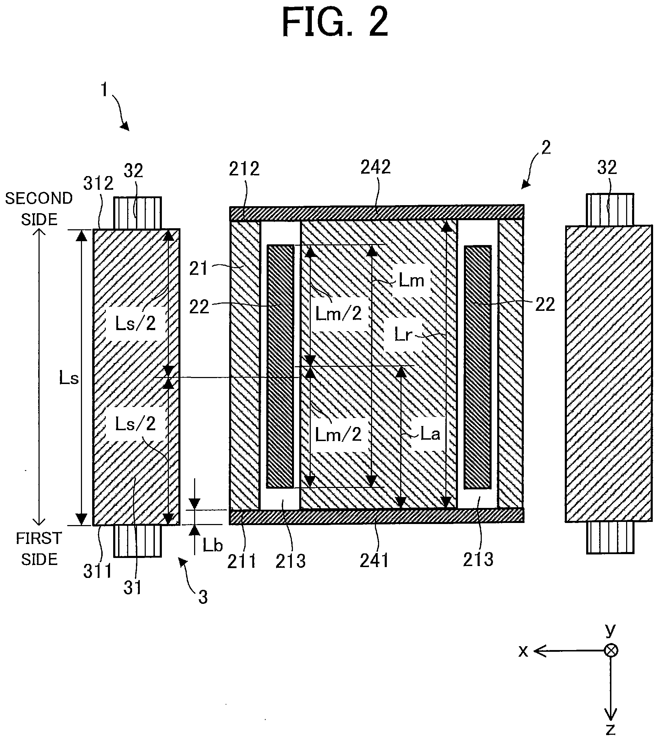

FIG. 2 is a cross-sectional view schematically showing the inside of the electric motor 1. In FIG. 2, the shaft 23 is removed from the rotor 2 to show the dimensions of the components of the rotor 2.

The electric motor 1 includes the rotor 2 and the stator 3. The electric motor 1 is a permanent magnet synchronous motor (also referred to as a brushless DC motor), such as a permanent magnet embedded motor. The electric motor 1 may include at least one bearing that rotatably supports the shaft 23 of the rotor 2.

### Stator 3

The stator 3 is located outside the rotor 2. As shown in FIG. 1, the stator 3 includes a stator core 31 and at least one coil 32. Each coil 32 is provided in the stator core 31. An insulator may be disposed between the stator core 31 and the coil 32.

The stator core 31 is an annular core that includes a yoke extending in the circumferential direction and a plurality of teeth each extending from the yoke in the radial direction. As shown in FIG. 2, a length Ls is the length of the stator core 31 in the axial direction.

The stator core 31, for example, is composed of a plurality of thin sheets of iron with magnetic properties. In the first embodiment, the stator core 31 is composed of a plurality of electrical steel sheets laminated in the axial direction.

The coil 32 (i.e., winding) is wound around, for example, an insulator attached to the stator core 31. In this case, the coil 32 is insulated by the insulator. The coil 32 is made, for example, of a material including copper or aluminum.

The stator core 31 may be fixed by a cylindrical shell made, for example, of a material including iron. In this case, the stator 3 is covered by the cylindrical shell with, for example, shrinkage fit.

The stator core 31 includes a first stator core end 311 and a second stator core end 312. The first stator core end 311 is the end of the stator core 31 on the first side in the axial direction. The second stator core end 312 is the end of the stator core 31 on the second side in the axial direction.

The first stator core end 311 is located away from the rotor core 21 of the rotor 2 to the first side in the axial direction.

### Rotor 2

The rotor 2 is rotatably disposed inside the stator 3. The rotor 2 includes the rotor core 21, at least one permanent magnet 22, and the shaft 23. In the present embodiment, the rotor 2 includes a plurality of permanent magnets 22. The rotor core 21 is fixed to the shaft 23. The rotor core 21 is a cylindrical shape. The rotor core 21 is composed of a plurality of electrical steel sheets, for example. As shown in FIG. 1, the rotor 2 may include at least one end plate 24.

The rotor core 21 includes a first rotor core end 211, a second rotor core end 212, and at least one magnet insertion hole 213. The first rotor core end 211 is the end of the rotor core 21 on the first side in the axial direction. The second rotor core end 212 is the end of the rotor core 21 on the second side in the axial direction.

The end plate 24 provided at the first rotor core end 211 is also referred to as a "first end plate 241." The end plate 24 provided at the second rotor core end 212 is also referred to as a "second end plate 242."

The shaft 23 is inserted into a shaft hole formed in the center portion of the rotor 2 in the xy plane, for example.

In the present embodiment, the rotor core 21 includes a plurality of magnet insertion holes 213. Each permanent magnet 22 is disposed in the magnet insertion hole 213. A length Lm is the length of the permanent magnet 22 in the axial direction.

As shown in FIG. 2, a distance La is the distance in the axial direction from the first rotor core end 211 to the center of the permanent magnet 22 in the axial direction. A distance Lb is the distance in the axial direction between the first stator core end 311 and the first rotor core end 211.

In the example shown in FIG. 2, the electric motor 1 satisfies Ls/2 > Lb + Lm/2 and Ls/2 < Lb + La.

### First Modification

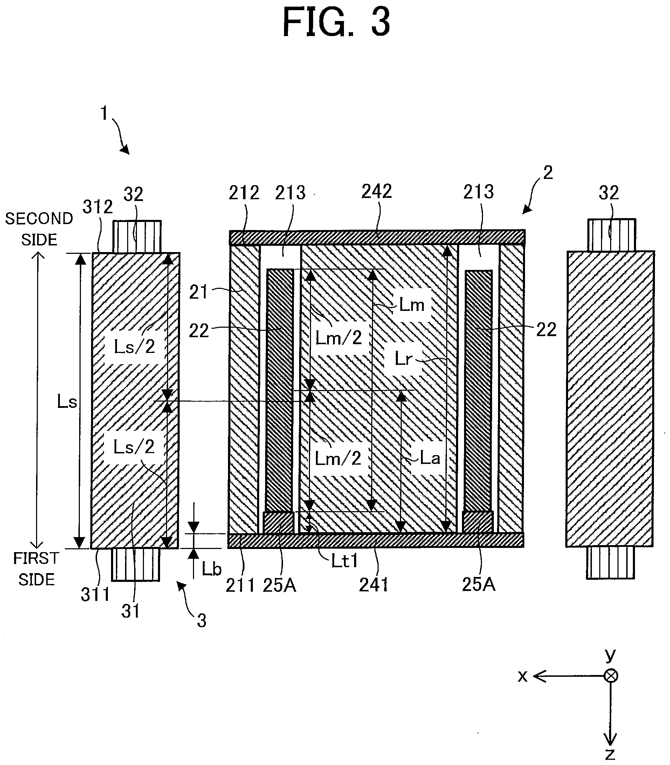

FIG. 3 is a cross-sectional view showing another example of the rotor 2.

The rotor 2 shown in FIG. 3 can be applied to the electric motor 1 shown in FIG. 1. In the first modification, the rotor 2 includes at least one non-magnetic material 25A. In the example shown in FIG. 3, the rotor 2 includes a plurality of non-magnetic materials 25A. Each non-magnetic material 25A is disposed on the first side in the axial direction with respect to the permanent magnet 22 in the magnet insertion hole 213. Each non-magnetic material 25A is made of, for example, resin, aluminum, or copper.

The length in the axial direction between the end of the permanent magnet 22 on the first side and the first rotor core end 211 is greater than or equal to Lt1, where Lt1 is the length of the non-magnetic material 25A in the axial direction. In this case, the electric motor 1 satisfies Ls/2 < Lb + La1, where Lm/2 + Lt1 = La1.

### Second Modification

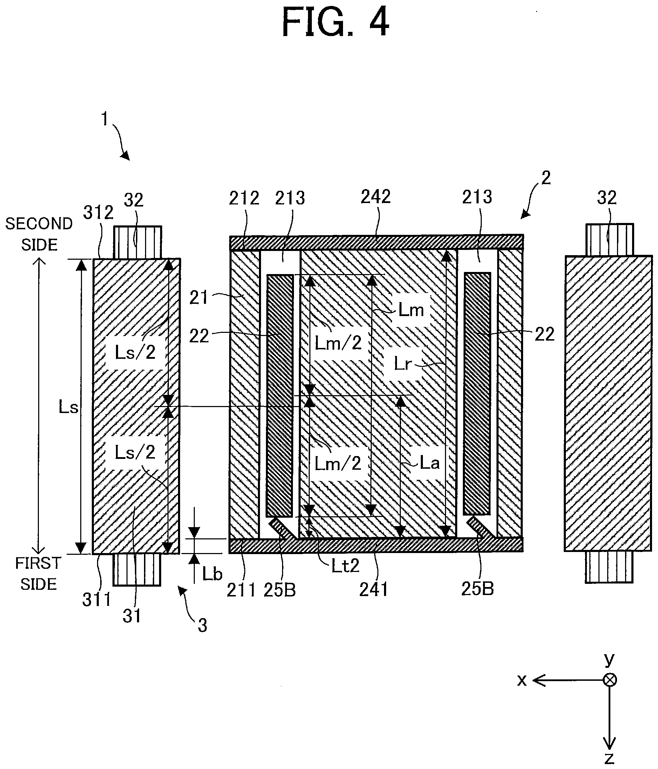

FIG. 4 is a cross-sectional view showing a still another example of the rotor 2.

The rotor 2 shown in FIG. 4 can be applied to the electric motor 1 shown in FIG. 1.

In the second modification, the rotor 2 includes the end plate 24 (specifically, first end plate 241) provided at the first rotor core end 211 of the rotor core 21. The first end plate 241 includes at least one protruding portion 25B. In the example shown in FIG. 4, the first end plate 241 includes a plurality of protruding portions 25B. Each protruding portion 25B protrudes in the magnet insertion hole 213 toward the second side that is opposite the first side in the axial direction.

The length in the axial direction between the end of the permanent magnet 22 on the first side and the first rotor core end 211 is greater than or equal to Lt2, where Lt2 is the length of the protruding portion 25B in the axial direction. In this case, the electric motor 1 satisfies Ls/2 < Lb + La2, where Lm/2 + Lt2 = La2.

### Third Modification

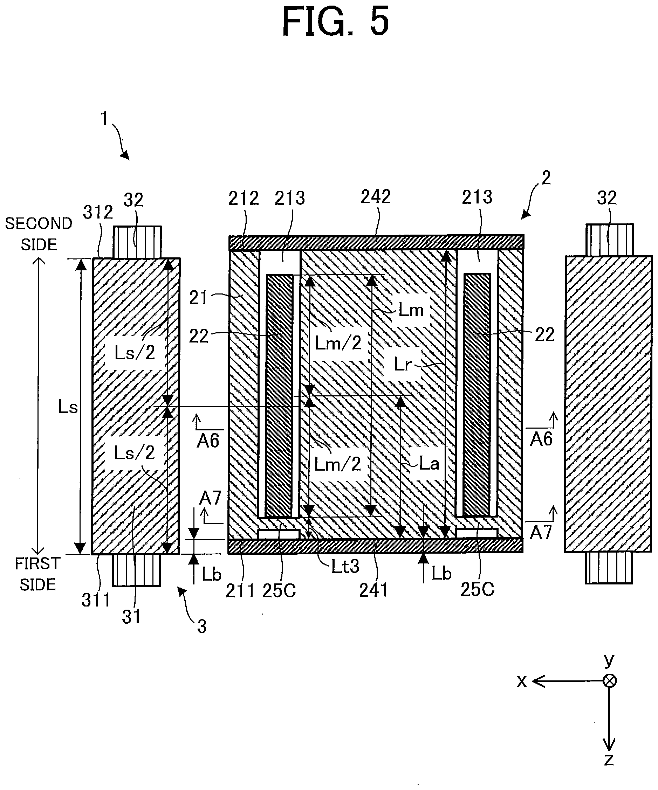

FIG. 5 is a cross-sectional view showing a still another example of the rotor 2.

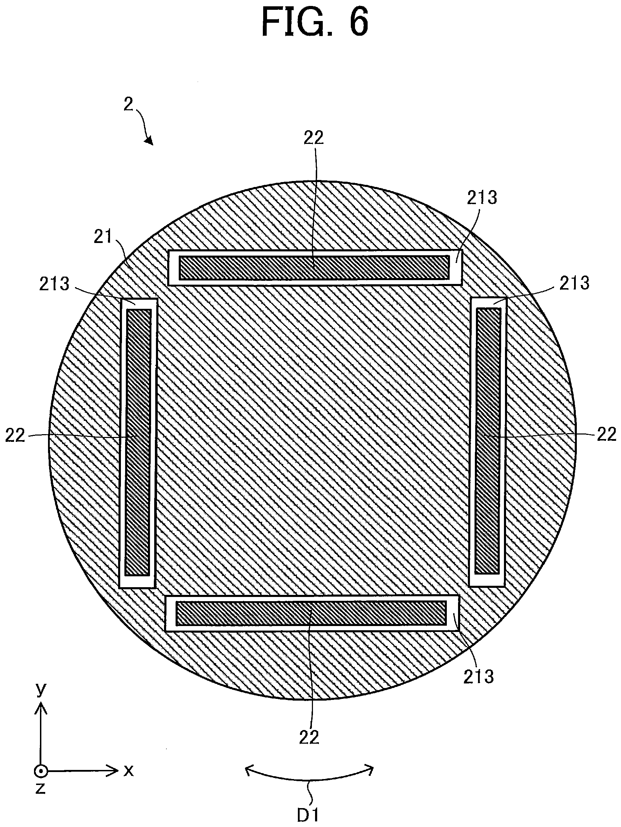

FIG. 6 is a cross-sectional view of the rotor 2 in FIG. 5 taken along line A6-A6.

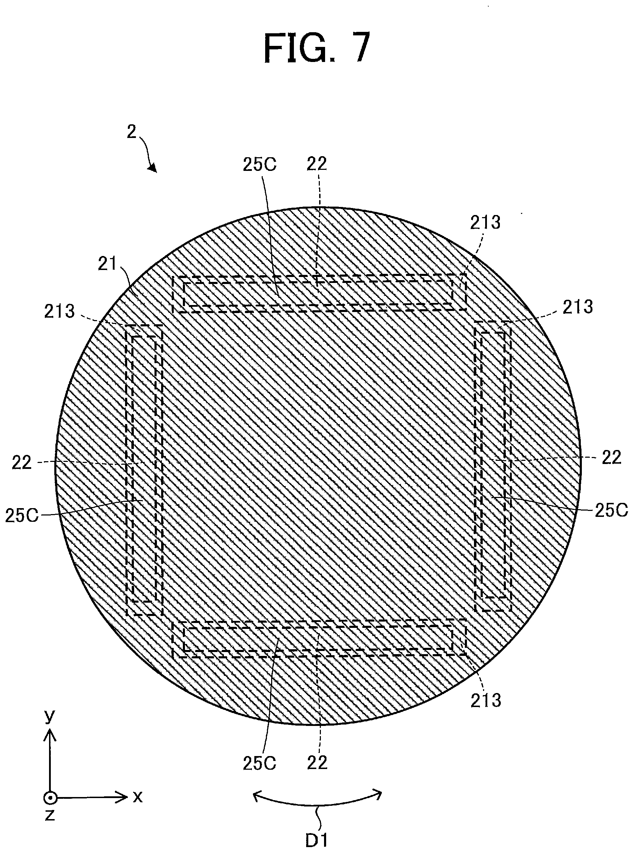

FIG. 7 is a cross-sectional view of the rotor 2 in FIG. 5 taken along line A7-A7.

The rotor 2 shown in FIG. 5 can be applied to the electric motor 1 shown in FIG. 1.

In third modification, at least a part of each magnet insertion hole 213 on the first side is covered by a cover 25C. The cover 25C is a part of the rotor core 21. As shown in FIG. 7, all of each magnet insertion hole 213 on the first side may be covered by the cover 25C.

The electric motor 1 satisfies Ls/2 < Lb + La3, where Lt3 is the length in the axial direction between a surface, which faces the permanent magnet 22, of the cover 25C and the first rotor core end 211 and Lm/2 + Lt3 = La3.

### Fourth Modification

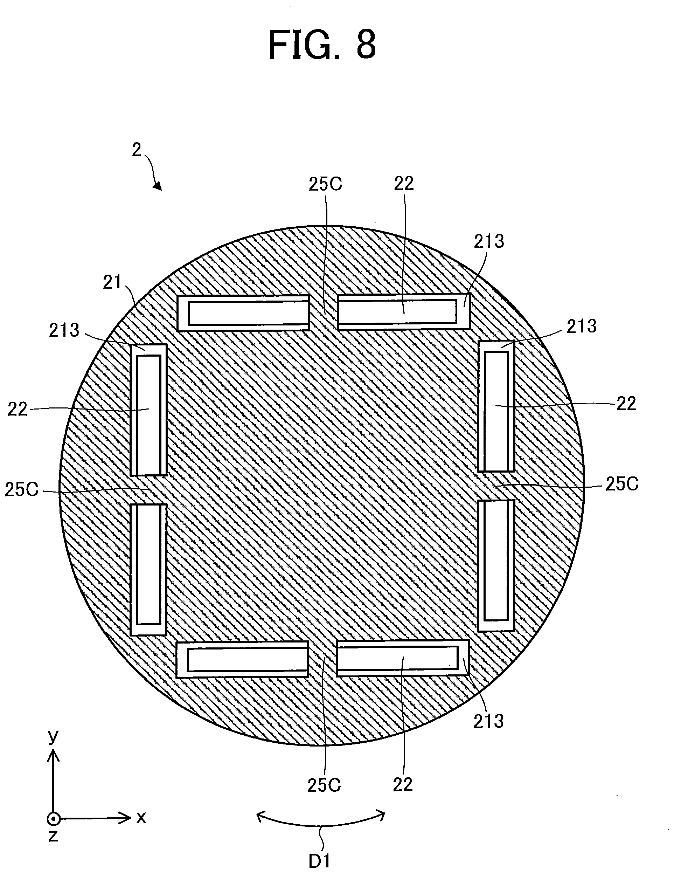

FIG. 8 is a cross-sectional view showing another example of the rotor core 21 shown in FIG. 5. The location of the cross section shown in FIG. 8 corresponds to the location of the cross section of the rotor 2 taken along line A7-A7 in FIG. 5.

The rotor core 21 shown in FIG. 8 can be applied to the rotor 2 shown in FIG. 5. That is, the rotor core 21 shown in FIG. 8 can be applied to the electric motor 1 shown in FIG. 1.

In the fourth modification, a part of each magnet insertion hole 213 on the first side is covered by a part of the rotor core 21. In other words, a part of each magnet insertion hole 213 on the first side is covered by the cover 25C. The other part of each magnet insertion hole 213 on the first side is not covered by the rotor core 21.

### Fifth Modification

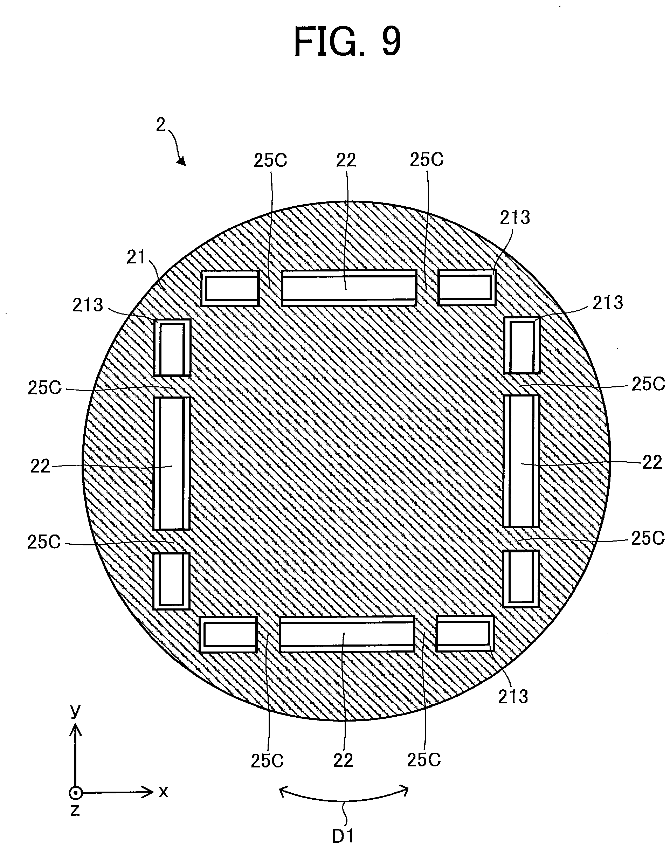

FIG. 9 is a cross-sectional view showing still another example of the rotor core 21 shown in FIG. 5. The location of the cross section shown in FIG. 9 corresponds to the location of the cross section of the rotor 2 taken along line A7-A7 in FIG. 5.

The rotor core 21 shown in FIG. 9 can be applied to the rotor 2 shown in FIG. 5. That is, the rotor core 21 shown in FIG. 9 can be applied to the electric motor 1 shown in FIG. 1.

In the fifth modification, a part of each magnet insertion hole 213 on the first side is covered by a part of the rotor core 21. In other words, a part of each magnet insertion hole 213 on the first side is covered by the plurality of covers 25C. In the example shown in Fig. 9, a part of each magnet insertion hole 213 on the first side is covered by the two covers 25C. The other part of each magnet insertion hole 213 on the first side is not covered by the rotor core 21.

### Sixth Modification

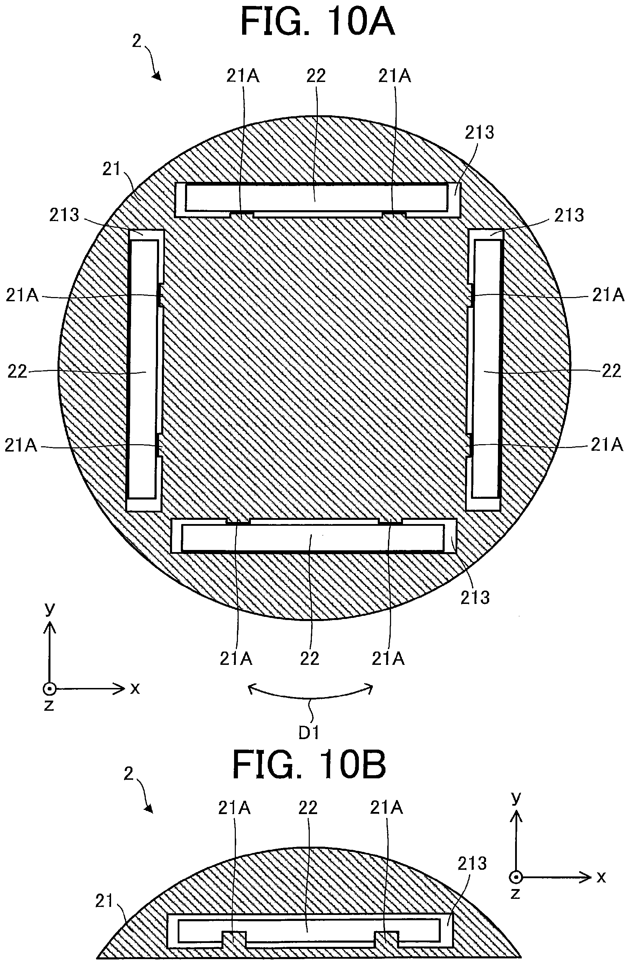

FIG. 10A and FIG. 10B are cross-sectional views showing still another example of the rotor core 21 shown in FIG. 5. The location of the cross section shown in FIG. 10A and FIG. 10B corresponds to the location of the cross section of the rotor 2 taken along line A7-A7 in FIG. 5. In FIG. 10B, a part of the rotor core 21 is shown.

The rotor core 21 shown in FIG. 10A or FIG. 10B can be applied to the rotor 2 shown in FIG. 5. That is, the rotor core 21 shown in FIG. 10A or FIG. 10B can be applied to the electric motor 1 shown in FIG. 1.

In the sixth modification, a part of the magnet insertion hole 213 on the first side and on an end side in the radial direction is covered by a part of the rotor core 21, and the other part of the magnet insertion hole 213 on the first side is not covered by the rotor core 21.

A part of the rotor core 21 is, for example, a projection 21A projecting in the radial direction of the rotor core 21. In the example shown in FIG. 10A and FIG. 10B, the rotor core 21 includes a plurality of projections 21A. Each projection 21A covers a part of the magnet insertion hole 213 on the first side. In the example shown in FIG. 10A and FIG. 10B, each projection 21A projects outward in the radial direction, but each projection 21A may project inward in the radial direction. Also, in order to hold the permanent magnet 22 by the plurality of projections 21A, it is preferable that the width in the radial direction of the magnet insertion hole 213 between the projections 21A and the inner wall, which faces the tips of the projections 21A, of the magnet insertion hole 213 be smaller than the width in the radial direction of the permanent magnet 22.

Each projection 21A may be in contact with the permanent magnet 22. In this case, each permanent magnet is supported by at least one projection 21A. In the example shown in FIG. 10A, each projection 21A is in contact with the surface, which faces in the radial direction, of the permanent magnet 22. The example shown in FIG. 10A shows a state where the permanent magnet 22 is pressed and supported by the projections 21A. For example, the permanent magnet 22 is fixed by the protrusions 21A with press fitting. When each projection 21A fixes the permanent magnet 22 with press fitting, the corner of the permanent magnet 22 may be chipped, so it is preferable that each permanent magnet 22 be chamfered.

In the example shown in FIG. 10B, each projection 21A is in contact with the end of the permanent magnet 22 on the first side. In this case, each permanent magnet 22 is supported in the axial direction by at least one projection 21A.

### Advantages of Present Embodiment

Normally, when the first stator core end 311 is located away from the rotor core 21 of the rotor 2 to the first side in the axial direction, the magnetic attractive force between the stator 3 and the rotor 2 occurs in the positive direction of the z-axis (downward in FIG. 1). The magnetic attractive force in the axial direction can preload the bearing that rotatably supports the shaft 23. When a mechanical bearing is used in which the shaft 23 can move freely in the axial direction (z-axis direction) to some extent, the rotor 2 can be held to one side by applying force in one direction to the rotor 2, thereby suppressing the vibration of the rotor 2.

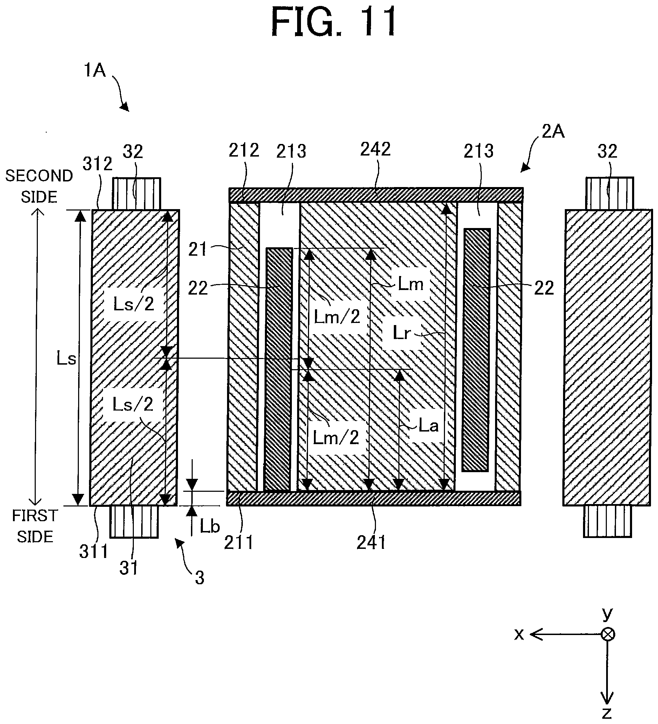

FIG. 11 is a cross-sectional view schematically showing an electric motor 1A as a comparative example.

In the electric motor 1A according to the comparative example, as in the present embodiment, the first stator core end 311 is located away from the rotor core 21 of the rotor 2 to the first side in the axial direction. That is, the distance in the axial direction between the first stator core end 311 and the first rotor core end 211 is a distance Lb. In the comparative example according to the electric motor 1A, the rotor 2A is different from the rotor 2 of the electric motor 1 according to the present embodiment. Specifically, in the axial direction, the position of the end of each permanent magnet 22 on the first side is the same as the position of the first rotor core end 211 of the rotor core 21. Therefore, the electric motor 1A according to the comparative example satisfies Ls/2 > Lb + Lm/2. That is, the center of each permanent magnet 22 in the axial direction is shifted to the first side with respect to the center of the stator core 31 in the axial direction. In this case, the magnetic attractive force in the axial direction between the stator 3 and the rotor 2A becomes unstable, and thus the preload given to the bearing that rotatably supports the shaft 23 becomes unstable. As a result, the vibration of the rotor 2A and the noise in the electric motor 1A increase, and thus the equipment used to control the electric motor 1A malfunctions.

In the electric motor 1 according to the present embodiment, the first stator core end 311 is located away from the rotor core 21 of the rotor 2 to the first side in the axial direction. That is, the distance in the axial direction between the first stator core end 311 and the first rotor core end 211 is the distance Lb. In this case, the electric motor 1 satisfies Ls/2 > Lb + Lm/2 and Ls/2 < Lb + La. Therefore, the center of each permanent magnet 22 in the axial direction is shifted to the second side with respect to the center of the stator core 31 in the axial direction. With this configuration, the magnetic attractive force in the axial direction between the stator 3 and the rotor 2 is properly adjusted. Specifically, the magnetic attractive force acting on the rotor core 21 due to the magnetic flux from the stator 3 occurs in the positive direction of the z-axis (downward in FIG. 1), and the magnetic attractive force between the stator 3 and rotor 2 due to the magnetic flux from each permanent magnet 22 also occurs in the positive direction of the z-axis (downward in FIG. 1), and thus the preload given to the bearing can be in the same one direction. As a result, the vibration of the rotor 2 and the noise in the electric motor 1 can be reduced, and it is possible to prevent the equipment used to control the electric motor 1 from malfunctioning.

As described in the first modification, the rotor 2 may include at least one non-magnetic material 25A. In this case, the non-magnetic material 25A is disposed on the first side in the axial direction with respect to the permanent magnet 22 in the magnet insertion hole 213. The length of the non-magnetic material 25A in the axial direction is indicated by Lt1. With this configuration, the position of the permanent magnet 22 in the axial direction is regulated by the non-magnetic material 25A. That is, the length in the axial direction between the end of the permanent magnet 22 on the first side and the first rotor core end 211 is regulated by the nonmagnetic material 25A to be greater than or equal to Lt1. In this case, the electric motor 1 satisfies Ls/2 < Lb + La1, where Lm/2 + Lt1 = La1. Therefore, in the first modification, the position of the permanent magnet 22 in the axial direction can be easily regulated, and the preload given to the bearing by the magnetic attractive force can be in one direction. As a result, the vibration of the rotor 2 and the noise in the electric motor 1 can be reduced, and it is possible to prevent the equipment used to control the electric motor 1 from malfunctioning.

As described in the second modification, the rotor 2 may include the end plate 24 (specifically, first end plate 241) provided at the first rotor core end 211 of the rotor core 21. The first end plate 241 includes at least one protruding portion 25B. The length of the protruding portion 25B in the axial direction is indicated by Lt2. The protruding portion 25B protruding portion protrudes in the magnet insertion hole 213 toward the second side that is opposite the first side in the axial direction. With this configuration, the position of the permanent magnet 22 in the axial direction is regulated by the protruding portion 25B. That is, the length in the axial direction between the end of the permanent magnet 22 on the first side and the first rotor core end 211 is regulated to be greater than or equal to Lt2 by the protruding portion 25B. In this case, the electric motor 1 satisfies Ls/2 < Lb + La2, where Lm/2 + Lt2 = La2.

In the second modification, the position of the permanent magnet 22 in the axial direction can be easily regulated in the process of manufacturing the electric motor 1. Therefore, in the second modification, the position of the permanent magnet 22 in the axial direction can be easily regulated, and the preload given to the bearing by the magnetic attractive force can be in one direction. As a result, the vibration of the rotor 2 and the noise in the electric motor 1 can be reduced, and it is possible to prevent the equipment used to control the electric motor 1 from malfunctioning.

In addition, in the second modification, no additional parts are needed to regulate the position of the permanent magnet. Therefore, the cost of the electric motor 1 can be reduced compared to the first modification.

As described in the first modification, the first side of each magnet insertion hole 213 may be covered by a part of the rotor core 21. The part of the rotor core 21 is the cover 25C. The length in the axial direction between the surface of the cover 25C facing the permanent magnet 22 and the first rotor core end 211 is indicated by Lt3. With this configuration, the position of the permanent magnet 22 in the axial direction is regulated by the cover 25C. That is, the length in the axial direction between the end of the permanent magnet 22 on the first side and the first rotor core end 211 is regulated by the cover 25C to be greater than or equal to Lt3. In this case, the electric motor 1 satisfies Ls/2 < Lb + La3, where Lm/2 + Lt3 = La3.

In the third modification, the position of the permanent magnet 22 in the axial direction can be easily regulated. Therefore, in the third modification, the position of the permanent magnet 22 in the axial direction can be easily regulated, and thus the preload given to the bearing by the magnetic attractive force can be in one direction. As a result, the vibration of the rotor 2 and the noise in the electric motor 1 can be reduced, and it is possible to prevent the equipment used to control the electric motor 1 from malfunctioning.

In addition, in the third modification, a part of the electrical steel sheet that constitutes the rotor core 21 only has to include the cover 25C. Therefore, the position of the permanent magnet 22 in the axial direction can be controlled with the number of electrical steel sheets. In other words, the position of the permanent magnet 22 in the axial direction can be controlled with the position of the electrical steel sheet that includes the cover 25C. For that reason, the accuracy of the position of the permanent magnet 22 in the axial direction can be enhanced.

As described in the fourth modification, a part of each magnet insertion hole 213 on the first side may be covered by a part of the rotor core 21. In other words, a part of each magnet insertion hole 213 on the first side is covered by the cover 25C. The other part of the first side of each magnet insertion hole 213 is not covered by the rotor core 21. With this configuration, the magnetic flux leaking from each permanent magnet 22 through the rotor core 21 can be reduced, and the position of the permanent magnet 22 in the axial direction can be regulated by the cover 25C. As a result, the magnetic flux from each permanent magnet 22 can be used effectively.

As described in the fifth modification, a part of each magnet insertion hole 213 on the first side may be covered by a plurality of covers 25C. With this configuration, the magnetic flux leaking from each permanent magnet 22 through the rotor core 21 can be reduced, and the position of the permanent magnet 22 in the axial direction can be regulated by each cover 25C. As a result, the magnetic flux from each permanent magnet 22 can be used effectively.

As described in the sixth modification, a part of the magnet insertion hole 213 on the first side and on the end side in the radial direction may be covered by a part of the rotor core 21. In this case, the other part of the magnet insertion hole 213 on the first side is not covered by the rotor core 21. A part of the rotor core 21 is, for example, the projection 21A projecting in the radial direction of the rotor core 21.

The projection 21A may be in contact with the permanent magnet 22. For example, each permanent magnet 22 is pressed and supported in the radial direction by the projection 21A. As a result, the position of the permanent magnet 22 in the axial direction can be regulated by the projection 21A. When the projection 21A holds the permanent magnet 22, the permanent magnet 22 can be fixed at any position, and thus the magnetic attractive force between the stator 3 and the rotor 2 due to the magnetic flux from each permanent magnet 22 can be determined as desired. As a result, the magnetic attractive force between the stator 3 and the rotor 2 can be appropriate.

According to the sixth modification, the magnetic flux leaking from each permanent magnet 22 through the rotor core 21 can be reduced, and the position of the permanent magnet 22 in the axial direction can be regulated by the projections 21A. As a result, the magnetic flux from each permanent magnet 22 can be used effectively.

In addition, according to the sixth modification, each permanent magnet 22 can be fixed more firmly. Therefore, the vibration of the permanent magnet 22 and the noise in the electric motor 1 during the rotation of the rotor 2 can be reduced.

### Second Embodiment

A compressor 6 according to a second embodiment will be described.

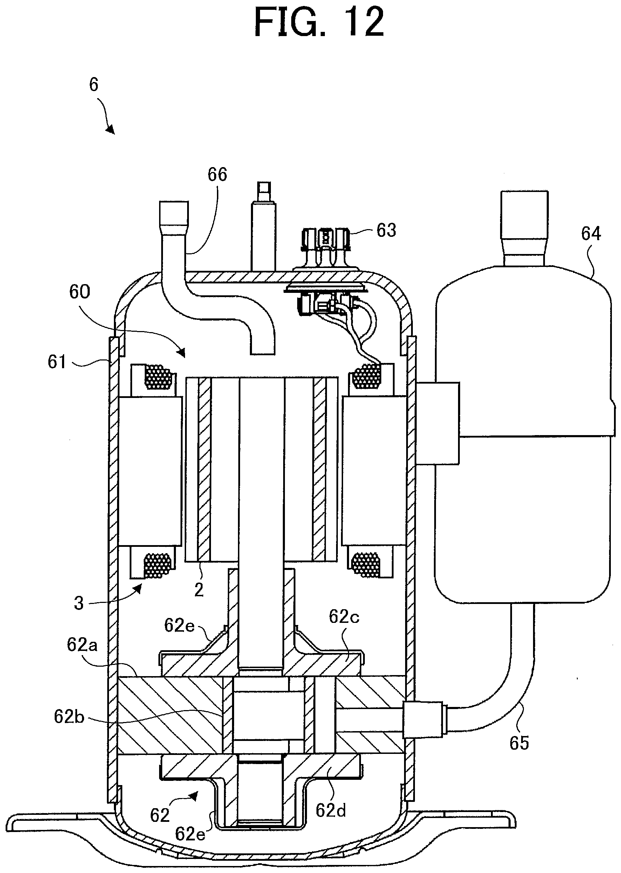

FIG. 12 is a cross-sectional view showing the structure of the compressor 6 according to the second embodiment.

The compressor 6 includes an electric motor 60 as an electric element, a sealed container 61 as a housing, and a compression mechanism 62 as a compression element (also referred to as a compression device) . In the present embodiment, the compressor 6 is a rotary compressor. However, the compressor 6 is not limited to a rotary compressor.

The electric motor 60 is the electric motor 1 according to the first embodiment.

The sealed container 61 covers the electric motor 60 and the compression mechanism 62. In the bottom portion of the sealed container 61, refrigerating machine oil for lubricating a sliding portion of the compression mechanism 62 is stored.

The compressor 6 further includes a glass terminal 63 fixed to the sealed container 61, an accumulator 64, a suction pipe 65, and a discharge pipe 66.

The compression mechanism 62 includes a cylinder 62a, a piston 62b, an upper frame 62c (first frame), a lower frame 62d (second frame), and mufflers 62e attached to the upper frame 62c and the lower frame 62d respectively. The compression mechanism 62 further includes vanes that divide the inside of the cylinder 62a into an inlet side and a compression side. The compression mechanism 62 is driven by the electric motor 60.

The electric motor 60 is fixed in the sealed container 61 with press fit or shrinkage fit. Instead of the press fit and the shrinkage fit, the stator 3 may be attached directly to the sealed container 61 with welding.

Power is supplied to the coils of the stator 3 of the electric motor 60 via the glass terminal 63.

The rotor 2 of the electric motor 60 (specifically, one end of the shaft of the rotor 2) is rotatably supported by bearings provided in each of the upper frame 62c and the lower frame 62d.

A shaft is inserted in the piston 62b. The shaft is rotatably inserted in the upper frame 62c and the lower frame 62d. The upper frame 62c and the lower frame 62d close the end surfaces of the cylinder 62a. The accumulator 64 supplies a refrigerant (e.g., refrigerant gas) to the cylinder 62a via the suction pipe 65.

Next, an operation of the compressor 6 will be described. A refrigerant supplied from the accumulator 64 is sucked into the cylinder 62a from the suction pipe 65 fixed to the sealed container 61. The electric motor 60 rotates by energizing an inverter and consequently the piston 62b fitted to the shaft rotates in the cylinder 62a. In this manner, the refrigerant is compressed in the cylinder 62a.

The refrigerant passes through the mufflers 62e and rises in the sealed container 61. Refrigerating machine oil is mixed in the compressed refrigerant. While the mixture of the refrigerant and the refrigerating machine oil is passing through a hole 36 formed in a rotor core, separation between the refrigerant and the refrigerating machine oil is promoted, and accordingly, a flow of refrigerating machine oil into the discharge pipe 66 can be prevented. In this manner, the compressed refrigerant is supplied to a high-pressure side of a refrigerant cycle through the discharge pipe 66.

As a refrigerant of the compressor 6, R410A, R407C, or R22, for example, can be used. However, the refrigerant of the compressor 6 is not limited to these materials. For example, as a refrigerant of the compressor 6, a refrigerant having a small global warming potential (GWP) or the like may be used.

Typical examples of the refrigerant having small GWPs include refrigerants as follows:
(1) Halogenated hydrocarbon including a carbon double bond in a composition is, for example, HFO-1234yf (CF3CF=CH2). HFO stands for Hydro-Fluoro-Olefin. Olefin is unsaturated hydrocarbon having one double bond. The GWP of HFO-1234yf is 4.
(2) Hydrocarbon having a carbon double bond in a composition is, for example, R1270 (propylene). The GWP of the R1270 is 3, which is smaller than the GWP of HFO-1234yf, but flammability of R1270 is higher than flammability of HFO-1234yf.
(3) A mixture including at least one of halogenated hydrocarbon having a carbon double bond in a composition or hydrocarbon having a carbon double bond in a composition is, for example, a mixture of HFO-1234yf and R32. Since HFO-1234yf is a low-pressure refrigerant, a pressure loss is large, and performance in a refrigeration cycle (especially in an evaporator) tends to degrade. Thus, it is preferable to use a mixture with R32 or R41, each of which is a high-pressure refrigerant, for example.

The compressor 6 according to the second embodiment has advantages described in the first embodiment.

In addition, the use of the electric motor 1 according to the first embodiment as the electric motor 60 can reduce the noise in the electric motor 60, and as a result, the noise in the compressor 6 can be reduced.

### Third Embodiment

A refrigerating and air conditioning apparatus 7, including the compressor 6 according to the second embodiment, as an air conditioner will be described.

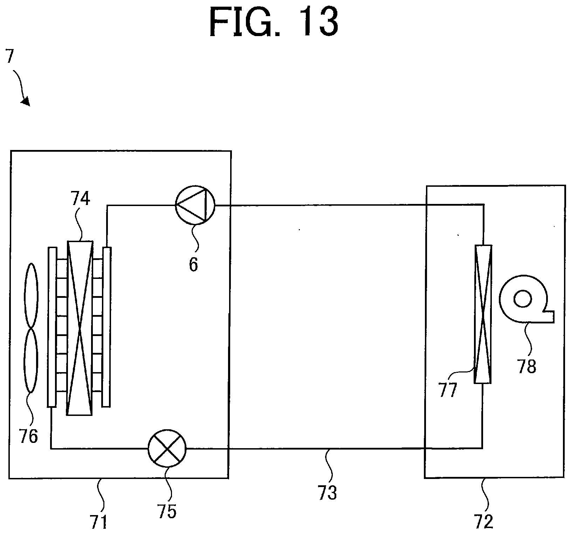

FIG. 13 is a diagram schematically showing the structure of the refrigerating and air conditioning apparatus 7 according to the third embodiment.

The refrigerating and air conditioning apparatus 7 is capable of cooling and heating operation, for example. The refrigerant circuit diagram shown in FIG. 13 is an example of a refrigerant circuit diagram of an air conditioner capable of cooling operation.

The refrigerating and air conditioning apparatus 7 according to the third embodiment includes an outdoor unit 71, an indoor unit 72, and a refrigerant pipe 73 to connect the outdoor unit 71 and the indoor unit 72.

The outdoor unit 71 includes the compressor 6, a condenser 74 as a heat exchanger, a throttling device 75, and an outdoor air blower 76 (first air blower). The condenser 74 condenses a refrigerant compressed by the compressor 6. The throttling device 75 decompresses the refrigerant condensed by the condenser 74, thereby adjusting a flow rate of the refrigerant. The throttling device 75 is also referred to as a decompression device.

The indoor unit 72 includes an evaporator 77 as a heat exchanger, and an indoor air blower 78 (second air blower). The evaporator 77 evaporates the refrigerant decompressed by the throttling device 75, thereby cooling indoor air.

The basic operation of the refrigerating and air conditioning apparatus 7 in cooling operation is described hereafter. In the cooling operation, a refrigerant is compressed by the compressor 6, and the compressed refrigerant flows into the condenser 74. The condenser 74 condenses the refrigerant, and the condensed refrigerant flows into the throttling device 75. The throttling device 75 decompresses the refrigerant, and the decompressed refrigerant flows into the evaporator 77. In the evaporator 77, the refrigerant evaporates, and the refrigerant (specifically a refrigerant gas) flows into the compressor 6 of the outdoor unit 71 again. When the air is sent to the condenser 74 by the outdoor air blower 76, heat moves between the refrigerant and the air. Similarly, when the air is sent to the evaporator 77 by the indoor air blower 78, heat moves between the refrigerant and the air.

The configuration and operation of the refrigerating and air conditioning apparatus 7 described above is an example and is not limited to the examples described above.

Since the refrigerating and air conditioning apparatus 7 according to the third embodiment includes the electric motor 1 described in the first embodiment, the refrigerating and air conditioning apparatus 7 has the advantages described in the first embodiment.

Since the refrigerating and air conditioning apparatus 7 according to the third embodiment includes the compressor 6 according to the second embodiment, the refrigerating and air conditioning apparatus 7 according to the third embodiment has the advantages described in the second embodiment. In addition, since the refrigerating and air conditioning apparatus 7 according to the third embodiment includes the compressor 6 according to the second embodiment, the noise in the refrigerating and air conditioning apparatus 7 can be reduced.

The electric motor 1 described in the first embodiment can be mounted on equipment including a driving source, such as a ventilator, household electrical appliance, or a machine tool, other than the refrigerating and air conditioning apparatus 7.

The features in each embodiment and in each modification described above may be combined with each other.

### DESCRIPTION OF REFERENCE CHARACTERS

1, 60 electric motor; 2 rotor; 3 stator; 6 compressor; 7 refrigerating and air conditioning apparatus; 21 rotor core; 22 permanent magnet; 24 end plate; 25A non-magnetic material; 25B protruding portion; 25C cover; 31 stator core; 61 sealed container; 62 compression mechanism.

## Claims

1. An electric motor comprising:
a stator including a stator core and a coil provided on the stator core; and
a rotor disposed inside the stator and including a rotor core and a permanent magnet, the rotor core including a magnet insertion hole, the permanent magnet being disposed in the magnet insertion hole,
wherein an end of the stator core on a first side in an axial direction is located away from the rotor core to the first side,
the electric motor satisfies Ls/2 > Lb + Lm/2 and Ls/2 < Lb + La
where Ls is a length of the stator core in the axial direction, Lb is a distance in the axial direction between the end of the stator core on the first side and an end of the rotor core on the first side, Lm is a length of the permanent magnet in the axial direction, and La is a distance in the axial direction from the end of the rotor core on the first side to a center of the permanent magnet in the axial direction.

2. The electric motor according to claim 1, wherein
the rotor includes a non-magnetic material,
the non-magnetic material is disposed on the first side in the axial direction with respect to the permanent magnet in the magnet insertion hole,
a length in the axial direction between an end of the permanent magnet on the first side and the end of the rotor core on the first side is greater than or equal to Lt1, where Lt1 is a length of the non-magnetic material in the axial direction, and
the electric motor satisfies Ls/2 < Lb + La1, where Lm/2 + Lt1 = La1.

3. The electric motor according to claim 1, wherein
the rotor includes an end plate provided at the end of the rotor core on the first side,
the end plate includes a protruding portion protruding in the magnet insertion hole toward the second side that is opposite the first side in the axial direction,
a length in the axial direction between an end of the permanent magnet on the first side and the end of the rotor core on the first side is greater than or equal to Lt2, where Lt2 is a length of the protruding portion in the axial direction, and
the electric motor satisfies Ls/2 < Lb + La2, where Lm/2 + Lt2 = La2.

4. The electric motor according to claim 1, wherein
the first side of the magnet insertion hole is covered by a part of the rotor core, and
the electric motor satisfies Ls/2 < Lb + La3, where Lt3 is a length in the axial direction between a surface, which faces the permanent magnet, of the part of the rotor core and the end of the rotor core on the first side and Lm/2 + Lt3 = La3.

5. The electric motor according to claim 4, wherein
a part of the magnet insertion hole on the first side is covered by the part of the rotor core, and
the other part of the magnet insertion hole on the first side is not covered by the rotor core.

6. The electric motor according to claim 4, wherein
a part of the magnet insertion hole on the first side and on an end side in a radial direction is covered by the part of the rotor core, and
the other part of the magnet insertion hole on the first side is not covered by the rotor core.

7. The electric motor according to claim 6, wherein
the part of the rotor core is a projection projecting in the radial direction of the rotor core,
the projection covers the part of the magnet insertion hole on the first side, and
the permanent magnet is pressed and supported by the projection.

8. A compressor comprising:
a sealed container;
a compression device disposed in the sealed container; and
the electric motor according to any one of claims 1 to 7, to drive the compression device.

9. An air conditioner comprising:
the compressor according to claim 8; and
a heat exchanger.
